# EUROPEAN PATENT APPLICATION

(11) **EP 4 401 179 A1**
(43) Date of publication of application: **17.07.2024**
(21) Application number: 22944090.4
(22) Date of filing: 30.05.2022
(51) Int. Cl.: H01M 10/04, H01M 50/10

(54) **BATTERY CELL, BATTERY, AND ELECTRICAL DEVICE**

(71) Applicant: Contemporary Amperex Technology Co., Limited, Ningde City, Fujian 352100 (CN)
(72) Inventor: XU, Liangfan, Ningde City, Fujian 352100 (CN); ZHOU, Wenlin, Ningde City, Fujian 352100 (CN); ZHANG, Qianqian, Ningde City, Fujian 352100 (CN); LI, Xing, Ningde City, Fujian 352100 (CN); LI, Quankun, Ningde City, Fujian 352100 (CN); NIU, Shaojun, Ningde City, Fujian 352100 (CN); JIN, Haizu, Ningde City, Fujian 352100 (CN)
(74) Representative: Ziebig Hengelhaupt Intellectual Property Attorneys Patentanwaltskanzlei PartGmbB
(86) International application number: PCT/CN2022/095875
(87) International publication number: WO 2023/230746

(57) **Abstract**

A battery cell, a battery and an electricity-consuming apparatus are provided by the present application. The battery cell (100) includes an electrode assembly (130) including an electrode main body (131) that includes an electrode sheet (133) and a separator (134) stacked with each other, and an electrode tab (132) extending from an end face (131a) of the electrode main body (131); and an infiltrating film (140) including a first end (141) and a second end (142) arranged opposite to each other in a length direction thereof, in which the second end (142) is connected to the separator (134), and the first end (141) extends beyond the electrode main body (131). In the technical solution of embodiments in the present application, an electrolyte flowing out of the electrode main body (131) can flow back into the electrode main body (131) through the infiltrating film (140), so that at least a portion of the electrolyte flowing out of the electrode main body (131) can be reused, and the utilization rate of the electrolyte can be improved.

## Description

### TECHNICAL FIELD

The present application relates to the technical field of battery, and in particular to a battery cell, a battery and an electricity-consuming apparatus.

### BACKGROUND

The energy conservation and the emission reduction are the keys to the sustainable development of the automotive industry, and an electric vehicle has become an important part of the sustainable development of the automotive industry due to its advantages of the energy conservation and the environmental protection. For the electric vehicle, the battery technology is also an important factor related to its development.

During the transportation or use of a battery in the prior art, an electrolyte inside the battery may overflow from an electrode assembly into a shell of a battery cell, resulting in the insufficient utilization of the electrolyte.

### SUMMARY

In view of the above problems, the present application provides a battery cell, a battery and an electricity-consuming apparatus, so that it can improve the utilization rate of an electrolyte.

In a first aspect, the present application provides a battery cell including an electrode assembly including an electrode main body, in which the electrode main body includes electrode sheets and a separator arranged to be stacked with each other; an end cover arranged on a side of the electrode assembly; and an infiltrating film including a first end and a second end arranged opposite to each other in a length direction of the infiltrating film, in which the second end is connected to the separator, and the first end extends towards the end cover and extends beyond the electrode main body.

In the technical solution of the embodiment in the present application, the battery cell may include the electrode assembly, the end cover and the infiltrating film. The electrode assembly may include the electrode main body. The electrode main body may include the electrode sheet and the separator, and an interior of the separator may be infiltrated with the electrolyte. The first end of the infiltrating film may be connected to the separator, and the second end of the infiltrating film may extend towards the end cover and extend beyond the electrode main body. When the battery cell is inverted or horizontally placed during transportation or use, the electrolyte may flow out of the electrode main body. The second end of the infiltrating film may extend beyond the electrode main body to absorb a portion of the electrolyte, and the first end of the infiltrating film may be connected to the separator, so that the electrolyte on the infiltrating film can flow to the separator. Therefore, the electrolyte flowing out of the electrode main body can flow back into the electrode main body through the infiltrating film, so that at least portion of the electrolyte flowing out of the electrode main body can be reused, and the utilization rate of the electrolyte can be improved.

In some embodiments, the electrode assembly further includes an electrode tab extending from an end face of the electrode main body towards the end cover, and the infiltrating film is attached to a surface of the electrode tab. The infiltrating film can be attached to the electrode tab instead of being dangled inside a shell of the battery cell, so the stability of the position of the infiltrating film can be improved so as to prevent the infiltrating film from breaking due to its shaking inside the battery cell, which otherwise would disadvantageously affect the usage effect of the infiltrating film. Also, the infiltrating film can provide the protection to the electrode tab and improve the service life of the electrode tab.

In some embodiments, the electrode tab includes a first surface and a second surface arranged opposite to each other in a thickness direction of the electrode tab, and at least a portion of the infiltrating film is attached to the first surface and/or the second surface, so that the infiltrating film can provide the protection to the first surface and/or the second surface.

In some embodiments, the electrode tab includes a converging segment and a connecting segment connected to a side of the converging segment facing away from the electrode main body, and the infiltrating film is attached to at least a portion of the converging segment, so that the infiltrating film can protect at least the converging segment. The converging segment can be arranged to protrude from the electrode main body, and the infiltrating film can be attached to the converging segment to absorb the electrolyte on a peripheral side of the converging segment.

In some embodiments, the first end may be connected to the converging segment or the first end may be connected to the connecting segment, and the infiltrating film may be attached to the converging segment and the connecting segment, so that the infiltrating film can always be attached to the converging segment. The infiltrating film can always extend beyond the electrode main body to absorb electrolyte flowing out of the electrode main body.

In some embodiments, the battery cell may further include the connecting plate connected to the first surface of the connecting segment. At least a portion of the infiltrating film is attached to the first surface, and the second end is connected to a surface of the connecting plate facing away from the connecting segment.

In these embodiments, when the battery cell is inverted, the surface of the connecting plate away from the connecting segment is located at a lowest position, and the second end of the infiltrating film can be located on the surface of the connecting plate away from the connecting segment, so that the infiltration film can absorb the electrolyte at the lowest position through the second end and transfer more electrolyte to the separator, which can improve the usage effect of the infiltrating film. In addition, the second end of the infiltrating film is located on the surface of the connecting plate away from the connecting segment, so that at least a portion of the infiltrating film can cover the surface of the connecting plate away from the connecting segment and can provide the protection to the connecting plate.

In some embodiments, the connecting plate may include a first sub-portion, a second sub-portion and a third sub-portion distributed sequentially in a length direction of the connecting plate. The second sub-portion is connected to the connecting segment, and the infiltrating film is connected to the first sub-portion, or the infiltrating film extends from the first sub-portion to the second sub-portion, or the infiltrating film extends from the first sub-portion to the third sub-portion.

In these embodiments, the infiltrating film can be connected with the first sub-portion to provide the protection to the first sub-portion. The connection between the infiltrating film and the second sub-portion can provide the protection to the second sub-portion. When the second sub-portion is welded to the connecting segment of the electrode tab, it can avoid a short circuit connection caused by particles, which are generated during welding, falling into the shell of the battery cell. The infiltrating film can be connected to each of the first sub-portion, the second sub-portion and the third sub-portion to provide the sufficient protection to the connecting plate.

In some embodiments, at least a portion of the infiltrating film is attached to the second surface, and the second end extends to a side of the connecting segment facing away from the converging segment, so that the infiltrating film can be completely attached to the connecting segment. The infiltrating film can avoid the short circuit connection caused by the particles, which are generated during welding, falling into the shell of the battery cell, so that it can improve the safety performance of the battery cell. In addition, it can also increase a distribution area of the infiltrating film and improve the usage effect of the infiltrating film.

In some embodiments, the battery cell may further include an isolating film arranged to be stacked with the infiltrating film, and each of the first end and the second end may extend beyond the isolating film. The isolating film can be arranged, so that it can provide the protection to the infiltrating film. In addition, the infiltrating film can be better attached to the electrode main body through the isolating film. The first end and the second end of the infiltrating film may extend beyond the isolating film, so that it may not affect the infiltration and adsorption of the electrolyte at the second end and may not affect the flow of the electrolyte between the first end and the separator.

In some embodiments, two or more isolating films are provided, and the infiltrating film is located between two adjacent isolating films. The isolating films are respectively arranged on both sides of the infiltrating film, so that it can improve the protection effect of the isolating film and improve the service life of the infiltrating film.

In some embodiments, in the length direction, a size of the first end and/or the second end extending beyond the isolating film is 1mm-5mm. When the size of the first end and/or the second end extending beyond the isolating film is within the above range, it can not only avoid the situation that the speed of absorbing or releasing the electrolyte is affected due to the too short size of the first end and/or the second end extending beyond the isolating film, but also avoid the situation that the protection of the isolating film is insufficient due to the too long size of the first end and/or the second end extending beyond the isolating film.

In some embodiments, in a width direction of the infiltrating film perpendicular to the length direction, a width of the infiltrating film is larger than or equal to a width of the isolating film, so that the infiltrating film or a side end face of the infiltrating film can be exposed from the isolating film, and it can improve the usage effect of the infiltrating film.

In some embodiments, the width of the infiltrating film is larger than the width of the isolating film, and the infiltrating film extends beyond the isolating film in the width direction, so that a side face of the infiltrating film in the width direction can absorb the electrolyte, and the usage effect of the infiltrating film can be improved.

In some embodiments, in the width direction, a size of the infiltrating film extending beyond the isolating film is 1mm-5mm. When the size of the infiltrating film extending beyond the isolating film is within the above range, it can not only avoid the situation that the speed of the infiltrating film absorbing or releasing the electrolyte is affected due to the too small size of the infiltrating film extending beyond the isolating film, but also avoid the situation that the protection of the isolating film is insufficient due to the too long size of the infiltrating film extending beyond the isolating film.

In some embodiments, a material of the isolating film may include a polyethylene terephthalate, so that the isolating film can have a good structural strength and sealing performance, and it can improve the protective performance of the isolating film.

In some embodiments, the electrode main body may include an end face connected with the electrode tab. The second end is connected to the end face, and can be connected to the separator exposed from the end face.

In some embodiments, the electrode main body may include an end face connected with the electrode tab. The electrode main body further includes a side face connected to a peripheral side of the end face and formed by extending in a direction away from the electrode tab, and the second end is connected to the side face, so that the second end can be connected to the separator exposed from the side face, the contact area between the second end and the separator can be enhanced, and the electrolyte can flow from the infiltrating film to the separator better.

In some embodiments, the electrode main body includes an end face connected with the electrode tab; the electrode main body further includes a bottom face arranged opposite to the end face, and the second end is connected to the bottom face. The second end can be connected to the separator exposed from the bottom face.

In some embodiments, a material of the infiltrating film may include at least one of a polypropylene and a polyethylene, so that the infiltrating film has good infiltrating ability and can better absorb the electrolyte.

In some embodiments, a thickness of the infiltrating film is 5µm-60µm. When the thickness of the infiltrating film is within the above range, it can not only avoid the situation that the infiltrating ability of the infiltrating film is affected due to the too small thickness, but also avoid the situation that the energy density of the battery cell is affected due to the too large thickness of the infiltrating film.

In a second aspect, embodiments of the present application also provide a battery including the battery cell according to any one of embodiments in the first aspect as described above.

In a third aspect, embodiments of the present application also provide an electricity-consuming apparatus including the battery according to any one of embodiments in the second aspect as described above, which is configured to supply an electric power.

The above description is only an overview of the technical solution of the present application. In order to have a clearer understanding of the technical means of the present application, it can be implemented according to the content of the description. In addition, in order to make the above and other purposes, features, and advantages of the present application more obvious and understandable, the specific embodiments of the present application are described below.

### BRIEF DESCRIPTION OF THE DRAWINGS

According to reading the detailed description of the preferred embodiments below, various other advantages and benefits will become clear to those skilled in the art. The drawings are only intended to illustrate the preferred embodiments and are not considered a limitation of the present application. In addition, throughout the entire drawings, the same reference symbols are used to represent the same components. In the drawings:
Fig. 1 shows a structural schematic view of a vehicle provided by an embodiment of the present application;
Fig. 2 shows a structural schematic view of a battery pack according to an embodiment of the present application;
Fig. 3 shows a structural schematic view of a battery module according to an embodiment of the present application;
Fig. 4 shows an exploded structural schematic view of a battery cell provided by an embodiment of the present application;
Fig. 5 shows a cross-sectional schematic view of an electrode assembly in the battery cell in Fig. 4;
Fig. 6 shows a partially enlarged structural schematic view of a battery cell provided by an embodiment of the present application; and
Fig. 7 shows a position relationship view of an infiltrating film and an isolating film of a battery cell provided by an embodiment of the present application.

The reference numerals in the specific embodiments are as follows:
1-vehicle; 10-battery; 11-controller; 12-motor;
20-battery module;
30-casing; 301- first casing portion; 302- second casing portion;
100-battery cell; 110-end cover; 111-electrode terminal; 120-shell; 130-electrode assembly; 131-electrode main body; 131a-end face; 131b-side face; 131c-bottom face; 132-electrode tab; 132a-first surface; 132b-second surface; 132c-converging segment; 132d-transitioning segment; 132e-contecting segment; HS-welding region; 133-electrode sheet; 133a-positive electrode sheet; 133b-negative electrode sheet; 134-separator; 140-infiltrating film; 141-first end; 142-second end; 150-connecting plate; 151-first sub-portion; 152-second sub-portion; 153-third sub-portion; 160-isolating film.

### DETAILED DESCRIPTION

Embodiments of the technical solutions of the present application will be described in detail below in conjunction with the drawings. The following examples are only used to illustrate the technical solution of the present application more clearly, and therefore are only examples, rather than restricting the protection scope of the present application.

It should be noted that, unless otherwise defined, technical terms or scientific terms used in the present application should be interpreted according to common meanings thereof as commonly understood by those of ordinary skills in the art.

In the description of the present application, the technical terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial" and "circumferential" and the like indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application.

In addition, technical terms such as "first" and "second" are only used for the description objects, and should not be understood as indicating or implying relative importance or implicitly indicating the number of the indicated technical features. In the description of the embodiments of the present application, "plurality" means two or more, unless otherwise specifically defined.

In the description of the present application, unless otherwise clearly specified and limited, the technical terms "mount", "communicate", "connect", "fix" and the like should be understood in a broad sense, for example, it can be a fixed connection, a detachable connection, or an integral form, it can be a mechanical connection, or an electrical connection, it can be a direct connection, or it can be connected indirectly through an intermediary, and it can be an internal communication of two elements or an interaction relationship between two elements. For those of ordinary skill in the art, the specific meaning of the above-mentioned terms in the present application can be understood according to specific situations.

In the description of the embodiments of the present application, unless otherwise specified and defined, a first feature "on" or "under" a second feature may mean that the first feature directly contacts with the second feature or the first feature indirectly contacts with the second feature through an intermediate medium. In addition, the first feature "on", "above" or "over" the second feature may mean that the first feature is directly or diagonally above the second feature, or merely indicates that the first feature is horizontally higher than the second feature. The first feature "under", "down" or "below" the second feature may mean that the first feature is directly or diagonally below the second feature, or merely indicates that the first feature is horizontally lower than the second feature.

At present, in view of the development of the market situation, the application of a power battery is becoming more and more extensive. The power battery is not only applied to a power source storage system such as a hydraulic power plant, a thermal power plant, a wind power plant, a solar power plant and the like, but also widely applied to an electric transportation tool such as an electric bicycle, an electric motorcycle, an electric vehicle and the like, as well as a military equipment and an aerospace and other fields. With the continuous expansion of the power battery application field, the market demand of the power battery application is also constantly expanding.

In the present application, a battery cell can include a lithium-ion secondary battery cell, a lithium-ion primary battery cell, a lithium-sulfur battery cell, a sodium lithium ion battery cell, a sodium ion battery cell, a magnesium ion battery cell or the like, and the embodiments of the present application do not restrict to that. The battery cell can be in a shape of cylinder, flat shape, cuboid or other shapes, and the embodiments of the present application do not restrict to that.

The battery mentioned in the embodiments of the present application refers to a single physical module that includes one or more battery cells to provide higher voltage and capacity. For example, the battery mentioned in the present application may include a battery module, a battery pack or the like. The battery may generally include a casing used to package one or more battery cells. The casing can prevent the charging or discharging of the battery cell from affecting by the liquid or other foreign objects.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer. The positive electrode active material layer is applied on a surface of the positive electrode current collector. The positive electrode current collector includes a positive electrode current collecting portion and a positive electrode tab connected with the positive electrode current collecting portion. The positive electrode current collecting portion is coated with the positive electrode active material layer, and the positive electrode tab is not coated with the positive electrode active material layer. Taking a lithium ion battery as an example, a material of the positive electrode current collector may be aluminum, the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer. The negative electrode active material layer is applied on a surface of the negative electrode current collector. The negative electrode current collector includes a negative electrode current collecting portion and a negative electrode tab protruding from the negative electrode current collecting portion. The negative electrode current collecting portion is coated with the negative electrode active material layer, and the negative electrode tab is not coated with the negative electrode active material layer. A material of the negative electrode current collector may be copper, and the negative electrode active material layer includes the negative electrode active material, which may be carbon, silicon or the like. A material of the separator may be PP (polypropylene), PE (polyethylene) or the like.

The inventors note that the battery cell may include an electrode main body and an electrode tab extending beyond the electrode main body. An interior of the electrode main body may be infiltrated with the electrolyte. During the transportation or use of battery cell, the battery cell may be inverted, it means that the electrode tab of the battery cell is located below the electrode main body; alternatively, the battery cell may be horizontally placed, it means that the electrode tab of the battery cell is located on a side of the electrode main body in a horizontal direction. It may result the problems that the electrolyte may flow out of the electrode main body and a portion of the electrolyte that flows out of the electrode main body may not be fully utilized.

In order to alleviate the problem of insufficient utilization of the electrolyte, after researching, the applicant found that a component capable of absorbing the electrode liquid can be arranged in the battery cell, and the component extends from the electrode main body and faces towards the bottom of the casing of the battery, so that the component can absorb the electrolyte outside the electrode main body and re-transfer the absorbed electrolyte back into the electrode main body when the battery cell is inverted in the casing of the battery.

Based on the above considerations, in order to solve the problem of insufficient utilization of electrolyte, the inventor has conducted in-depth research and designed a battery cell, a battery and an electricity-consuming apparatus.

In such a battery cell, the battery cell may include an electrode assembly and an infiltrating film. The electrode assembly may include an electrode main body and an electrode tab extending beyond the electrode main body. The electrode main body may include an electrode sheet and a separator. One end of the infiltrating film may extend beyond the electrode main body to absorb the electrolyte outside the electrode main body, and the other end of the infiltrating film may be connected to the separator to transfer the electrolyte into the electrode main body.

The technical solution described in the embodiments of the present application may be applicable to the battery and the electricity-consuming apparatus using the battery.

The electricity-consuming apparatus may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming apparatus.

It should be understood that the technical solutions described in the embodiments of the present application are applicable to not the battery and the electricity-consuming apparatus described above, but also any other batteries including the casing and any other electricity-consuming apparatus using the batteries. However, for the sake of simplification of the description, the following embodiments will be illustrated by taking the electric vehicle as an example.

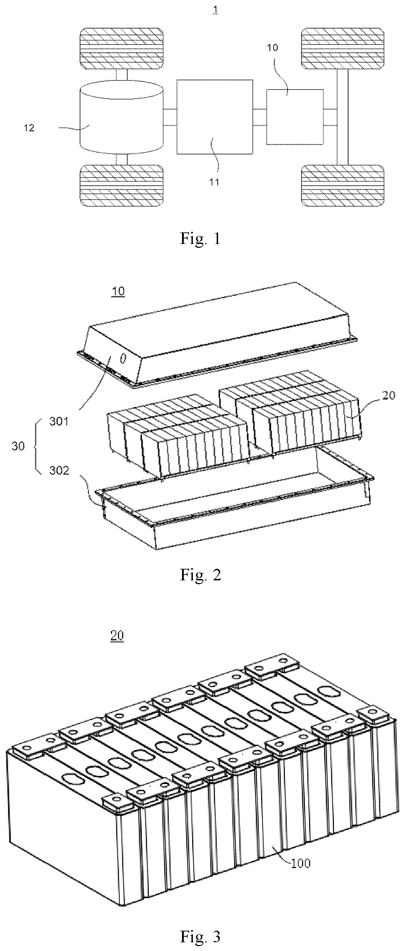

Referring to Fig. 1, Fig. 1 shows a structural schematic view of a vehicle 1 according to some embodiments of the present application. The vehicle 1 can be a fuel vehicle, a gas vehicle or a new energy vehicle. The new energy vehicles can be a pure electric vehicle, a hybrid vehicle, an extended-range vehicle and the like. A battery 10 may be arranged inside the vehicle 1, and the battery 10 may be arranged in the bottom, the front or the back of the vehicle 1. The battery 10 can be used to supply power to the vehicle 1000, for example, the battery 10 can be used as an operating power source of the vehicle 1000. The vehicle 1 may further include a controller 11 and a motor 12, the controller 11 can be used to control the battery 10 to supply power to the motor 12, for example, for starting, navigating and driving the vehicle 1.

In some embodiments of the present application, the battery 10 can not only serve as an operating power source for the vehicle 1, but also as a driving power source for the vehicle 1, so as to replace or partially replace the fuel or the natural gas and provide the driving power for the vehicle 1.

In order to meet different requirements of using electricity power, the battery 10 may include a plurality of battery cells. The battery cell refers to the smallest unit constituting a battery module or a battery pack. The plurality of battery cells can be connected in series and/or in parallel through an electrode terminal to apply to various application scenarios. The battery referred to in the present application may include the battery module or the battery pack. Herein, the plurality of battery cells can be connected in series, in parallel or in hybrid. The connection in hybrid refers to the combination of the connection in series and the connection in parallel. In the embodiments of the present application, the plurality of battery cells can directly form the battery pack, or can form the battery module 20 firstly, and then form the battery pack.

Fig. 2 shows a structural schematic view of the battery 10 according to an embodiment of the present application.

As shown in Fig. 2, the battery may include the casing 30 and the battery cells (not shown in the figure), and the battery cells are accommodated in the casing.

The casing 30 can be a simple three-dimensional structure such as a single cuboid, a single cylinder or a single sphere, the casing 30 can also be a complex three-dimensional structure composed of the simple three-dimensional structures such as a cuboid, a cylinder or a sphere, and the embodiments of the present application do not restrict to that. The material of casing 30 can be an alloy material such as aluminum alloy, iron alloy or the like, or a polymer material such as a polycarbonate, a polyisocyanurate foam plastic or the like, or a composite material such as glass fiber, epoxy resin or the like, and the embodiments of the present application do not restrict to that.

The casing can be used to accommodate the battery cell, and the casing 30 can be of various structures. In some embodiments, the casing may include a first casing portion 301 and a second casing portion 302, the first casing portion 301 and the second casing portion 302 can cover each other, and the first casing portion 301 and the second casing portion 302 jointly define an accommodating space for accommodating the battery cell. The second casing portion 302 can be a hollow structure with an opening at an end, the first casing portion 301 can be a plate-shaped structure, and the first casing portion 301 can cover on an opening side of the second casing portion 302 to form the casing with the accommodating space. Alternatively, each of the first casing portion 301 and the second casing portion 302 can also be the hollow structure with the opening on a side, and the opening side of the first casing portion 301 can cover the opening side of the second casing portion 302 to form the casing 30 with the accommodating space. Of course, the first casing portion 301 and the second casing portion 302 can be various shapes, such as cylinders, rectangles or the like.

In order to improve the sealing performance of the first casing portion 301 and the second casing portion 302 after connecting with each other, a sealing member, such as a sealant, a sealing rings or the like, can also be arranged between the first casing portion 301 and the second casing portion 302.

It is assumed that the first casing portion 301 covers a top of the second casing portion 302, the first casing portion 301 can also be referred to as an upper casing cover, and the second casing portion 302 can also be referred to as a lower casing.

In the battery, there may be one or more battery cells. If there are a plurality of the battery cells, the battery cells may be connected in series, in parallel, or in hybrid. The connection in hybrid refers to both the connection in series and the connection in parallel among the plurality of battery cells. The plurality of battery cells can be directly connected in series, parallel or hybrid together, and the whole composed of the plurality of battery cells can be accommodated in the casing 30. Of course, alternatively, the plurality of battery cells can also be connected in series, parallel or hybrid to form the battery module 20 firstly, then the plurality of battery modules 20 can be connected in series, parallel or hybrid to form a whole and accommodated in the casing 30.

Fig. 3 shows a structural schematic view of the battery module 20 according to an embodiment of the present application.

In some embodiments, as shown in Fig. 3, there are a plurality of battery cells 100. The plurality of battery cells 100 can also be connected in series, parallel or hybrid to form the battery module 20 firstly, then the plurality of battery modules 20 can be connected in series, parallel or hybrid to form a whole and accommodated in the casing.

The plurality of battery cells 100 in battery module 20 can be electrically connected through a bus bar to achieve the connection in parallel, series or hybrid of the plurality of battery cells in battery module 20.

In the present application, the battery cell 100 can include a lithium ion battery cell, a sodium ion battery cell, a magnesium ion battery cell or the like, and the embodiments of the present application do not restrict to that. The battery cell 100 can be in a shape of cylinder, flat shape, cuboid or other shapes, and the embodiments of the present application do not restrict to that. Generally, the battery cell 100 can be divided into three types according to the packaging method: a cylindrical battery cell, a square battery cell, and a soft pack battery cell, and the embodiments of the present application do not restrict to that. However, for the sake of simple description, the following embodiments are illustrated by taking the cuboid battery cell as an example.

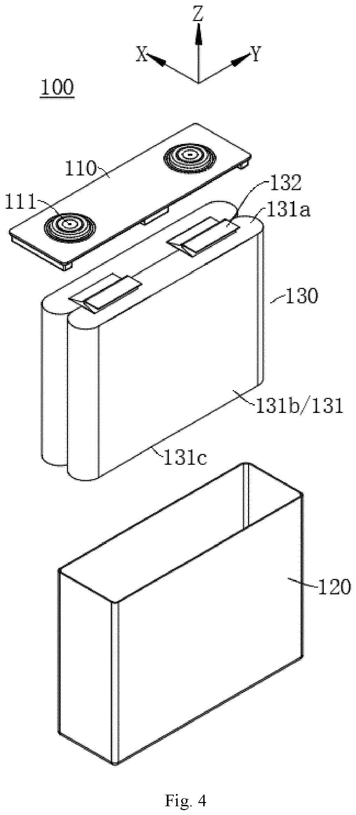

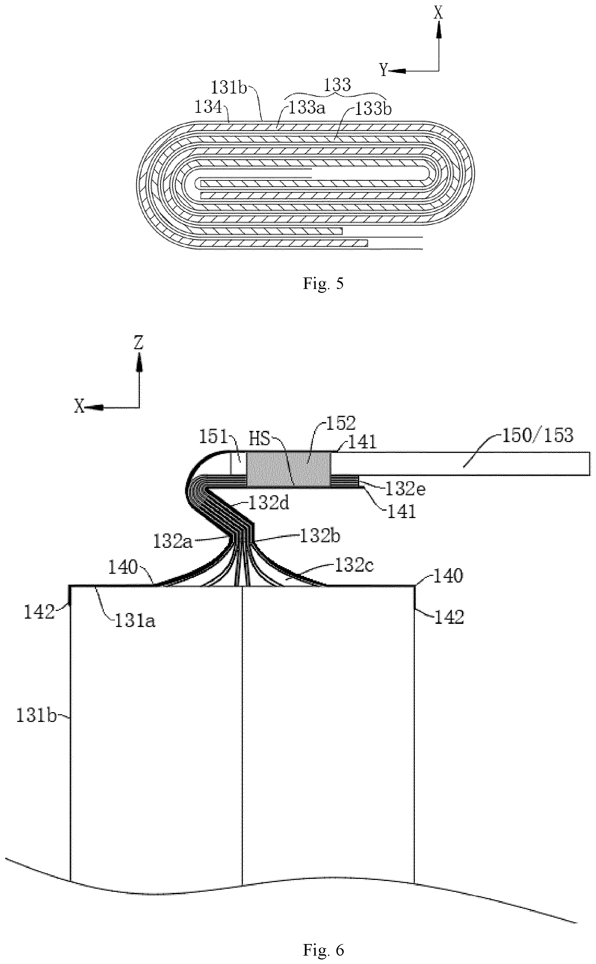

Fig. 4 shows an exploded structural schematic view of the battery cell 100 provided by an embodiment of the present application; Fig. 5 shows a cross-sectional schematic view of the electrode assembly in the battery cell in Fig. 4; and Fig. 6 shows a partially enlarged structural schematic view of the battery cell 100 provided by an embodiment of the present application. The battery cell 21 refers to the smallest unit constituting the battery.

As shown in Fig. 4 to Fig. 6, the battery cell 100 includes an electrode assembly 130, an end cover 110 and an infiltrating film 140. The electrode assembly 130 includes an electrode main body 131that includes the electrode sheets 133 and the separator 134 arranged to be stacked with each other. The end cover 110 may be arranged on a side of the electrode assembly 130. The infiltrating film 140 may include a first end 141 and a second end 142 arranged opposite to each other in a length direction of the infiltrating film 140. The second end 142 may be connected to the separator 134, and the first end 141 may extend towards the end cover 110 and extends beyond the electrode main body 131.

The electrode assembly 130 may be a component that undergoes the electrochemical reaction in the battery cell 100. The electrode assembly 130 may include the electrode main body 131 and an electrode tab 132 arranged on an end face 131a of the electrode main body 131. The electrode sheets 133 may include a positive electrode sheet 133a and a negative electrode sheet 133b, and the electrode tab 132 may include a positive electrode tab 132 and a negative electrode tab 132. The electrode assembly 130 can be mainly formed by winding or stacking the positive electrode sheet 133a and the negative electrode sheet 133b, with the separator 134 usually provided between the positive electrode sheet 133a and the negative electrode sheet 133b. On the one hand, the separator 134 is configured to ensure the mutual insulation between the positive electrode sheet 133a and the negative electrode sheet 133b, and on the other hand, the separator 134 is configured to be infiltrated by the electrolyte. Portions of the positive electrode sheet 133a and the negative electrode sheet 133b that have active substances may form the electrode main body 131 of the electrode assembly 130, and portions of the positive electrode sheet 133a and negative electrode sheet 133b that do not have the active substances may respectively form the electrode tabs 132. The positive electrode tab 132 and the negative electrode tab 132 can be located together at an end of the electrode main body 131 or at two ends of the electrode main body 131 respectively. During the charging and discharging process of the battery, the positive active substance and the negative active substance can react with the electrolyte, and the electrode tabs 132 are connected to the electrode terminals 111 to form a current circuit.

The battery cell 100 may further include a shell 120, and the end cover 110 refers to a component that covers an opening of the shell 120 to isolate an internal environment of the battery cell 100 from an external environment. Unrestrictedly, the shape of the end cover 110 can adapt to the shape of the shell 120 to match with the shell 120. Optionally, the end cover 110 can be made of a material (such as aluminum alloy) with a certain hardness and strength, so that the end cover 110 may be less prone to deformation when subjected to compression and collision, the battery cell 100 is enable to obtain a higher structural strength, and the safety performance can be improved. A functional component such as the electrode terminal 111 and the like can be arranged on the end cover 110. The electrode terminal 111 can be electrically connected to the electrode assembly 130 for outputting or inputting the electrical power of the battery cell 100. In some embodiments, the end cover 110 may also be provided with a pressure-releasing mechanism for releasing the internal pressure when the internal pressure or temperature of the battery cell 100 reaches a threshold. The end cover 110 can also be made of various materials, such as a copper, an iron, an aluminum, a stainless steel, an aluminum alloy, a plastic or the like, and the embodiments of the present application do not specially restrict to that. In some embodiments, an insulating member can also be arranged on an inner side of the end cover 110, and the insulating member can be used to isolate the electrical connection components in the shell 120 from the end cover 110 to reduce the risk of the short circuit. Exemplarily, the insulating member may be a plastic, a rubber or the like.

The infiltrating film 140 can be infiltrated by at least a portion of the electrolyte, in other words, the electrolyte can be absorbed by the infiltrating film 140. The first end 141 of the infiltrating film 140 may extend beyond the end face 131a, and the second end 142 may be connected to the separator 134, so that the infiltrating film 140 can transfer the electrode liquid located outside the electrode main body 131 to the separator 134.

In the technical solution of the embodiment in the present application, the battery cell 100 may include the electrode assembly 130, the end cover 110 and the infiltrating film. The electrode assembly 130 may include the electrode main body 131. The electrode main body 131 may include the electrode sheet 133 and the separator 134, and an interior of the separator 134 may be infiltrated with the electrolyte. The first end 141 of the infiltrating film 140 may be connected to the separator 134, and the second end 142 of the infiltrating film 140 may extend towards the end cover 110 and extend beyond the electrode main body 131. When the battery cell 100 is inverted or horizontally placed during transportation or use, the electrolyte may flow out of the electrode main body 131. The second end 142 of the infiltrating film 140 may extend beyond the electrode main body 131 to absorb a portion of the electrolyte, and the first end 141 of the infiltrating film 140 may be connected to the separator 134, so that the electrolyte on the infiltrating film 140 can flow to the separator 134. Therefore, the electrolyte flowing out of the electrode main body 131 can flow back into the electrode main body 131 through the infiltrating film 140, so that at least portion of the electrolyte flowing out of the electrode main body can be reused, and the utilization rate of the electrolyte can be improved.

Optionally, as shown in Fig. 5 and Fig. 6, the separator 134 may be located on a side face 131b of the electrode main body 131, or the separator 134 may be exposed from the end face 131a and a bottom face 131c of the electrode main body 131. There are various ways by which the second end 142 can be connected to the separator 134, and the second end 142 can be connected to the separator 134 on at least one of the end face 13 1a, the side face 131b and the bottom face.

Optionally, please continue to refer to Fig. 4, the battery cell 100 may further include the shell 120.

The shell 120 may be a component used to match with the end cover 110 to form the internal environment of the battery cell 100. Herein, the formed internal environment can be used to accommodate the electrode assembly 130, electrolyte (not shown in the figure) and other components. The shell 120 and the end cover 110 can be independent components, and an opening can be formed on the shell 120. The end cover 110 can cover the opening at the place of the opening to form the internal environment of the battery cell 100. For no purpose of limitation, the end cover 110 and the shell 120 can also be integrated. Specifically, the end cover 110 and the shell 120 can form a common connecting surface before other components entering into the shell firstly, then the end cover 110 can cover the shell 120 when it is necessary to package an interior of the shell 120. The shell 120 can be of various shapes and sizes, such as a rectangle, a cylinder, a hexagonal prism or the like. Specifically, the shape of the shell 120 can be determined based on the specific shape and size of the electrode assembly 130. The shell 120 can be made of various materials, such as, but not limited to, copper, iron, aluminum, stainless steel, aluminum alloy, plastic.

According to some embodiments of the present application, as shown in Fig. 6, the electrode assembly 130 may further include an electrode tab 132 extending from the electrode main body 131 towards the end cover 110, and the infiltrating film 140 can be attached to a surface of the electrode tab 132. Optionally, the infiltrating film 140 can be bonded to the surface of the electrode tab 132 using a bonding adhesive or a bonding layer.

In these optional embodiments of the present application, the infiltrating film 140 can be attached to the electrode tab 132 instead of being dangled inside a shell of the battery cell 100, so the stability of the position of the infiltrating film 140 can be improved so as to prevent the infiltrating film 140 from breaking due to its shaking inside the battery cell 100, which otherwise would disadvantageously affect the usage effect of the infiltrating film 140. Also, the infiltrating film 140 can provide the protection to the electrode tab 132 and improve the service life of the electrode tab 132.

In some embodiments, as shown in Fig. 6, the electrode tab 132 may include a first surface 132a and a second surface 132b arranged opposite to each other in a thickness direction of the electrode tab 132, and at least a portion of the infiltrating film 140 may be attached to the first surface 132a and/or the second surface 132b, so that the infiltrating film 140 can provide the protection to the first surface 132a and/or the second surface 132b. For example, when the electrode tab 132 may include a plurality of sub-sheets arranged to be stacked with one another, the thickness direction is a stacking direction of the sub-sheets.

Generally, when the electrode tab 132 is connected with the connecting plate 150, the electrode tab 132 can be bent to form a bent angle. One of the first surface 132a and the second surface 132b may be an outer surface of the electrode tab 132 away from the bent angle, and the other thereof may be formed as an inner surface of the bent angle. The embodiments of the present application may take the first surface 132a as the outer surface and the second surface 132b as the inner surface as an example.

When at least a portion of the infiltrating film 140 is attached to the first surface 132a, the infiltrating film 140 can provide the protection to the electrode tab 132, so as to reduce the risk of the electrode tab 132 being collided and deformed by external components. When at least a portion of the infiltrating film 140 is attached to the second surface 132b, for example, when the infiltrating film 140 is attached to a position of the bent angle, the infiltrating film 140 can avoid the insertion of the electrode tab 132 caused by the bent electrode tab 132, so that it can increase the service life of the electrode tab 132.

In some embodiments, as shown in Fig. 6, the electrode tab 132 may include a converging segment 132c and a connecting segment 132e connected to a side of the converging segment 132c facing away from the electrode main body 131, and the infiltrating film 140 may be attached to at least a portion of the converging segment 132c.

Optionally, the electrode tab 132 may further include a transitioning segment 132d connected between the converging segment 132c and the connecting segment 132e. A plurality of sub-sheets of the electrode tab can be converged with one another at the converging segment 132c and bent at the transitioning segment 132. The connecting segment 132e can be used to connect the connecting plate.

In these embodiments, the sub-sheets extending beyond the electrode main body 131 may gradually approach and attach to one another at the converging segment 132c, and the electrode tab 132 can be bent at the transitioning segment 132d to form the bent angle. The connecting segment 132e of the electrode tab 132 can be welded to the connecting plate 150. When the infiltrating film 140 is attached to at least a portion of the converging segment 132c, the infiltrating film 140 can at least protect the converging segment 132c. The converging segment 132c can be arranged to protrude from the electrode main body 131, and the infiltrating film 140 can be attached to the converging segment 132c to absorb the electrolyte on a peripheral side of the converging segment 132c.

Optionally, the first end 141 may be connected to the converging segment 132c, so that the infiltrating film 140 can cover at least a portion of the converging segment 132c.

Alternatively, the first end 141 may be connected to the transitioning segment 132d. The infiltrating film 140 can also be attached to the converging segment 132c and at least a portion of transitioning segment 132d, so that the infiltrating film 140 can provide the protection to both the converging segment 132c and the transitioning segment 132d simultaneously. In addition, it can also increase the distribution area of the infiltrating film 140 out of the electrode main body 131 and improve the usage effect of the infiltrating film 140.

Optionally, the first end 141 may be connected to the connecting segment 132e. The infiltrating film 140 can also be attached to the converging segment 132c, the transitioning segment 132d and at least a portion of the connecting segment 132e, so that it can further improve the protection effect and the usage effect of the infiltrating film 140. The usage effect of the infiltrating film 140 refers to the effect of the infiltrating film 140 transferring the electrolyte to the separator 134.

Optionally, the connecting segment 132e may be flush with the end face 131a, so that it can be convenient for welding the connecting plate 150 and the connecting segment 132e with each other.

In some embodiments, as shown in Fig. 6, the battery cell 100 may further include the connecting plate 150 connected to the first surface 132a of the connecting segment 132e. At least a portion of the infiltrating film 140 may be attached to the first surface 132a, and the second end 142 may be connected to a surface of the connecting plate 150 facing away from the connecting segment 132e. The gray filled region in Fig. 6 is a region where the connecting plate 150 and the connecting segment 132e are welded to each other.

In these embodiments, when the battery cell 100 is inverted, the surface of the connecting plate 150 away from the connecting segment 132e is located at a lowest position, and the second end 142 of the infiltrating film 140 can be located on the surface of the connecting plate 150 away from the connecting segment 132e, so that the infiltration film 140 can absorb the electrolyte at the lowest position through the second end 142. The infiltrating film 140 can transfer more electrolyte to the separator 134, so that it can improve the usage effect of the infiltrating film 140. In addition, the second end 142 of the infiltrating film 140 can be located on the surface of the connecting plate 150 away from the connecting segment 132e, so that at least a portion of the infiltrating film 140 can cover the surface of the connecting plate 150 away from the connecting segment 132e and can provide the protection to the connecting plate 150.

In some embodiments, as shown in Fig. 6, the connecting plate 150 may include a first sub-portion 151, a second sub-portion 152 and a third sub-portion 153 distributed sequentially in a length direction of the connecting plate 150. The second sub-portion 152 may be connected to the connecting segment 132e, and the infiltrating film 140 may be connected to the first sub-portion 151, or the infiltrating film 140 may extend from the first sub-portion 151 to the second sub-portion 152, or the infiltrating film 140 may extend from the first sub-portion 151 to the third sub-portion 153. In Fig. 6, the second sub-portion 152 may be a portion of the connecting plate 150 covered by the gray region, which is the portion of the connecting plate 150 welded to the connecting segment 132e.

In a direction from the transitioning segment 132d to the connecting segment 132e, the first sub-portion 151 may be a portion of the connecting plate 150 close to the transitioning segment 132d of the electrode tab 132, and the third sub-portion 153 may be a portion of the connecting plate 150 far away from the transitioning segment 132d of the electrode tab 132.

In these embodiments, the infiltrating film 140 is connected with the first sub-portion 151 so that it can provide the protection to the first sub-portion 151. The infiltrating film 140 is connected with the second sub-portion 152 so that it can provide the protection to the second sub-portion 152, and moreover, when the second sub-portion 152 is welded to the connecting segment 132e of the electrode tab 132, it can prevent particles generated during welding from falling into the shell of the battery cell 100, which would otherwise cause a short circuit. The infiltrating film 140 is connected to each of the first sub-portion 151, the second sub-portion 152 and the third sub-portion 153 so that it can provide the sufficient protection to the connecting plate 150.

In some embodiments, as shown in Fig. 6, at least a portion of the infiltrating film 140 may be attached to the second surface 132b, and the second end 142 may extend to a side of the connecting segment 132e facing away from the converging segment 132c. For example, the electrode tab 132 may provide with a welding region HS, and the second end 142 may extend to a side of the welding region HS away from the converging segment 132c. In Fig. 6, the region of the connecting segment 132e covered by the grey-colored area is the welding region HS, that is, the region of the connecting segment 132e where the connecting segment 132e and the connecting plate 150 are welded together is the welding region HS.

In these embodiments, the infiltrating film 140 can be attached to the whole welding region, so that the infiltrating film 140 can prevent particles generated during welding from falling into the shell of the battery cell 100, which otherwise would cause a short circuit, thus improving the safety performance of the battery cell 100. In addition, it can increase a distribution area of the infiltrating film 140 and improve the usage effect of the infiltrating film 140.

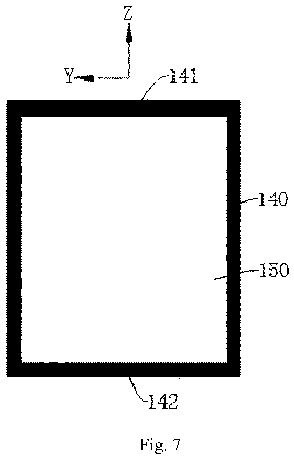

In some embodiments, as shown in Fig. 6 and Fig. 7, the battery cell may further include an isolating film 160. The isolating film 160 may be arranged to be stacked with the infiltrating film 140. Each of the first end 141 and the second end 142 may extend beyond the isolating film 160. The isolating film 160 can be an insulating film.

In these embodiments, the isolating film 160 is arranged so that it can provide the protection to the infiltrating film 140. In addition, the infiltrating film 140 can also be better attached to the electrode main body 131 through the isolating film 160. The first end 141 and the second end 142 of the infiltrating film 140 may extend beyond the isolating film 160, so that it may not affect the infiltration and adsorption of the electrolyte at the second end 142 and may not affect the flow of the electrolyte between the first end 141 and the separator 134.

In some embodiments, two or more isolating films 160 can be provided, and the infiltrating film 140 may be located between two adjacent isolating films 160. The isolating films 160 are respectively arranged on both sides of the infiltrating film 140, so that it can improve the protection effect of the isolating film 160 and improve the service life of the infiltrating film 140.

In some embodiments, as shown in Fig. 6 and Fig. 7, in the length direction, a size of the first end 141 and/or the second end 142 extending beyond the isolating film 160 may be 1mm-5mm. The length direction may be a Z direction in Fig. 7.

When the size of the first end 141 extending beyond the isolating film 160 is within the above range, it can not only avoid the situation that the speed of the electrolyte transferring between the infiltrating film 140 and the separator 134 is affected due to the too short size of the first end 141 extending beyond the isolating film 160, but also avoid the situation that the protection of the isolating film 160 is insufficient due to the too long size of the first end 141 extending beyond the isolating film 160.

When the size of the second end 142 extending beyond the isolating film 160 is within the above range, it can not only avoid the situation that the speed of the infiltrating film 140 absorbing the electrolyte is affected due to the too short size of the second end 142 extending beyond the isolating film 160, but also avoid the situation that the protection of the isolating film 160 is insufficient due to the too long size of the second end 142 extending beyond the isolating film 160.

In some embodiments, as shown in Fig. 6 and Fig. 7, in a width direction of the infiltrating film 140, a width of the infiltrating film 140 may be larger than or equal to a width of the isolating film 160, and the width direction is perpendicular to the length direction. The width direction may be a Y direction in Fig. 7.

In these embodiments, the width of the infiltrating film 140 may be larger than or equal to the width of the isolating film 160, so that the infiltrating film 140 or a side end face 131a of the infiltrating film 140 can be exposed from the isolating film 160, the side end face 131a of the infiltrating film 140 can absorb or transfer the electrolyte, and it can improve the usage effect of the infiltrating film 140.

In some embodiments, as shown in Fig. 7, the width of the infiltrating film 140 may be larger than the width of the isolating film 160, and the infiltrating film 140 may extend beyond the isolating film 160 in the width direction, so that a side face 131b of the infiltrating film 140 in the width direction can absorb the electrolyte, and the usage effect of the infiltrating film 140 can be improved.

In some embodiments, as shown in Fig. 7, in the width direction, a size of the infiltrating film 140 extending beyond the isolating film 160 may be 1mm-5mm.

In these embodiments, when the size of the infiltrating film 140 extending beyond the isolating film 160 is within the above range, it can not only avoid the situation that the speed of the infiltrating film 140 absorbing or releasing the electrolyte is affected due to the too small size of the infiltrating film 140 extending beyond the isolating film 160, but also avoid the situation that the protection of the isolating film 160 is insufficient due to the too long size of the infiltrating film 140 extending beyond the isolating film 160.

In some embodiments, a material of the isolating film 160 may include a polyethylene terephthalate, so that the isolating film 160 can have a good structural strength and sealing performance, and it can improve the protective performance of the isolating film 160.

In some embodiments, the second end 142 may be connected to the end face 131a, and the second end 142 can be connected to the separator 134 exposed from the end face 131a.

In some embodiments, as shown in Fig. 6, the electrode main body 131 further includes an side face 131b connected to a peripheral side of the end face 131a and formed by extending in a direction away from the electrode tab 132. The second end 142 is connected with the side face 131b, so that the second end 142 can be connected to the separator 134 exposed from the side face 131b, the contact area between the second end 142 and the separator 134 can be enhanced, and the electrolyte can flow from the infiltrating film 140 to the separator 134 better.

In some embodiments, the electrode main body 131 may further include a bottom face 131c arranged opposite to the end face 131a, and the second end 142 may be connected to the bottom face 131c. The second end 142 can be connected to the separator 134 exposed from the bottom face 131c.

In some embodiments, a material of the infiltrating film 140 may include at least one of a polypropylene and a polyethylene, so that the infiltrating film 140 has good infiltrating ability and can better absorb the electrolyte.

In some embodiments, a thickness of the infiltrating film 140 may be 5µm-60µm. When the thickness of the infiltrating film 140 is within the above range, it can not only avoid the situation that the infiltrating ability of the infiltrating film 140 is affected due to the too small thickness of the infiltrating film 140, but also avoid the situation that the energy density of the battery cell 100 is affected due to the too large thickness of the infiltrating film 140.

According to some embodiments of the present application, there is also provided a battery including the battery cell according to any one of the technical solutions as described above.

According to some embodiments of the present application, there is also provided an electricity-consuming apparatus including the battery according to any one of the technical solutions as described above, and the battery is configured to supply an electric power to the electricity-consuming apparatus.

The electricity-consuming apparatus may be any one of the devices or systems using the battery as described above.

Referring to Fig. 4 to Fig. 7, the embodiments of the present application provide the battery cell 100 including: the electrode assembly 130 including the electrode main body 131 and the electrode tab 132 extending from an end face 131a of the electrode main body 131, in which the electrode main body 131 may include the electrode sheet 133 and the separator 134 arranged to be stacked with each other; the infiltrating film 140, including the first end 141 and the second end 142 arranged opposite to each other in the length direction of the infiltrating film 140, in which the second end 142 is connected to the separator 134, the first end 141 extends beyond the end face 131a, and the infiltrating film 140 is attached to the surface of the electrode tab 132. The battery cell 100 may further include the isolating film 160 arranged to be stacked with the infiltrating film 140. The infiltrating film 140 may be located between two isolating films 160, each of the first end 141 and second end 142 of the infiltrating film 140 may extend beyond the isolating film 160, and the infiltrating film 140 may be attached to the surface of the electrode tab 132 and the electrode main body 131 through the isolating film 160. The electrode tab 132 may include the first surface 132a and the second surface 132b arranged opposite to each other in the thickness direction of the electrode tab 132, and at least a portion of the infiltrating film 140 may be attached to the first surface 132a and the second surface 132b. The battery cell 100 may further include the connecting plate 150. The connecting plate 150 may be connected to the first surface 132a of the connecting segment 132e of the electrode tab 132. The connecting plate 150 may include the first sub-portion 151, the second sub-portion 152 and the third sub-portion 153 distributed sequentially in the length direction of the connecting plate 150. The infiltrating film 140 may extend from the first sub-portion 151 to the third sub-portion 153. At least a portion of the infiltrating film 140 may be attached to the second surface 132b, and the second end 142 may extend to the side of the connecting segment 132e facing away from the transitioning segment 132d. The size of the first end 141 and/or the second end 142 extending beyond the isolating film 160 may be 1mm-5mm. The width of the infiltrating film 140 may be larger than the width of the isolating film 160, and the infiltrating film 140 may extend beyond the isolating film 160 in the width direction. In the width direction, the size of the infiltrating film 140 extending beyond the isolating film 160 may be 1mm-5mm. The material of the isolating film 160 may include the polyethylene terephthalate. The material of the infiltrating film 140 may include at least one of the polypropylene and the polyethylene. The thickness of the infiltrating film 140 may be 5µm-60µm.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some or all of the technical features; these modifications or substitutions do not separate the essence of the corresponding technical solutions from the scope of the technical solutions of the various embodiments of the present application, and they should all be covered within the scope of the claims and description of the present application. Especially, as long as there is no structural conflict, the various technical features mentioned in each of the embodiments can be combined in any way. The present application is not restricted to the specific embodiments disclosed in the text, but includes all technical solutions falling within the scope of the claims.

## Claims

1. A battery cell, **characterized by** comprising:
an electrode assembly, comprising an electrode main body that comprises electrode sheets and a separator arranged to be stacked with each other;
an end cover, arranged on a side of the electrode assembly; and
an infiltrating film, comprising a first end and a second end arranged opposite to each other in a length direction of the infiltrating film, wherein the second end is connected to the separator, and the first end extends towards the end cover and extends beyond the electrode main body.

2. The battery cell according to claim 1, **characterized in that**, the electrode assembly further comprises an electrode tab extending from an end face of the electrode main body towards the end cover, and the infiltrating film is attached to a surface of the electrode tab.

3. The battery cell according to claim 2, **characterized in that**, the electrode tab comprises a first surface and a second surface arranged opposite to each other in a thickness direction of the electrode tab, and at least a portion of the infiltrating film is attached to the first surface and/or the second surface.

4. The battery cell according to claim 3, **characterized in that**, the electrode tab comprises a converging segment and a connecting segment connected to a side of the converging segment facing away from the electrode main body, the connecting segment is configured to connect a connecting plate, and the infiltrating film is attached to at least a portion of the converging segment.

5. The battery cell according to claim 4, **characterized in that**, the first end is connected to the converging segment or the first end is connected to the connecting segment, and the infiltrating film is attached to the converging segment and the connecting segment.

6. The battery cell according to claim 4, **characterized by**, further comprising the connecting plate, connected to the first surface of the connecting segment, wherein at least a portion of the infiltrating film is attached to the first surface, and the second end is connected to a surface of the connecting plate facing away from the connecting segment.

7. The battery cell according to claim 6, **characterized in that**, the connecting plate comprises a first sub-portion, a second sub-portion and a third sub-portion distributed sequentially in a length direction of the connecting plate, the second sub-portion is connected to the connecting segment, and the infiltrating film is connected to the first sub-portion, or the infiltrating film extends from the first sub-portion to the second sub-portion, or the infiltrating film extends from the first sub-portion to the third sub-portion.

8. The battery cell according to claim 5, **characterized in that**, at least a portion of the infiltrating film is attached to the second surface, and the second end extends to a side of the connecting segment facing away from the converging segment.

9. The battery cell according to claim 1, **characterized by**, further comprising an isolating film, arranged to be stacked with the infiltrating film, wherein each of the first end and the second end extends beyond the isolating film.

10. The battery cell according to claim 9, **characterized in that**, two or more isolating films are provided, and the infiltrating film is located between two adjacent isolating films.

11. The battery cell according to claim 9, **characterized in that**, in the length direction, a size of the first end and/or the second end extending beyond the isolating film is 1mm-5mm.

12. The battery cell according to claim 9, **characterized in that**, in a width direction of the infiltrating film, a width of the infiltrating film is larger than or equal to a width of the isolating film, and the width direction is perpendicular to the length direction.

13. The battery cell according to claim 12, **characterized in that**, the width of the infiltrating film is larger than the width of the isolating film, and the infiltrating film extends beyond the isolating film in the width direction.

14. The battery cell according to claim 13, **characterized in that**, in the width direction, a size of the infiltrating film extending beyond the isolating film is 1mm-5mm.

15. The battery cell according to claim 9, **characterized in that**, a material of the isolating film comprises a polyethylene terephthalate.

16. The battery cell according to claim 1, **characterized in that**, the electrode main body comprises an end face connected with the electrode tab,
the second end is connected to the end face;
or, the electrode main body further comprises a side face connected to a peripheral side of the end face, and the second end is connected to the side face;
or, the electrode main body further comprises a bottom face arranged opposite to the end face, and the second end is connected to the bottom face.

17. The battery cell according to claim 1, **characterized in that**, a material of the infiltrating film comprises at least one of a polypropylene and a polyethylene.

18. The battery cell according to claim 1, **characterized in that**, a thickness of the infiltrating film is 5µm-60µm.

19. A battery, **characterized by** comprising a casing and the battery cell according to any one of claims 1-18 accommodated in the casing.

20. The battery according to claim 19, **characterized in that**, the casing comprises a bottom wall, and the battery cell comprises the end cover that is arranged on a side of the battery cell close to the bottom wall.

21. An electricity-consuming apparatus, **characterized in that**, the electricity-consuming apparatus comprises the battery according to claim 20, which is configured to supply an electric power.
